# EUROPÄISCHE PATENTANMELDUNG

(11) **EP 4 621 376 A1**
(43) Veröffentlichungstag der Anmeldung: **24.09.2025**
(21) Anmeldenummer: 24164754.4
(22) Anmeldetag: 20.03.2024
(51) Int. Cl.: G01M 11/06

(54) **VORRICHTUNG, SYSTEM UND VERFAHREN ZUM AUSRICHTEN EINES SCHEINWERFER-EINSTELL-PRÜFGERÄTS**

(71) Anmelder: Hella Gutmann Solutions GmbH, 79241 Ihringen (DE)
(72) Erfinder: Driewer, Adrian, 79241 Ihringen (DE); Munt, Stanislaw, 79241 Ihringen (DE)
(74) Vertreter: Pfenning, Meinig & Partner mbB

(57) **Zusammenfassung**

Die vorliegende Erfindung betrifft eine Vorrichtung, ein System sowie ein Verfahren zum Ausrichten eines Scheinwerfer-Einstell-Prüfgeräts (SEP) auf die geometrische Fahrachse eines Fahrzeugs.

## Beschreibung

Die vorliegende Erfindung betrifft eine Vorrichtung, ein System sowie ein Verfahren zum Ausrichten eines Scheinwerfer-Einstell-Prüfgeräts (SEP) auf die geometrische Fahrachse eines Fahrzeugs.

SEPs werden zur Vermessung von Lichtverteilungen, die von Scheinwerfern erzeugt werden, genutzt. Ziel ist es beispielsweise, den Scheinwerfer des Fahrzeuges auf Grundlage der gemessenen Lichtverteilung derart einzustellen, dass ein Blenden vorausfahrender Fahrzeuge oder des Gegenverkehrs verhindert wird. Um das Blenden des Gegenverkehrs oder vorausfahrender Fahrzeuge effektiv zu verhindern, sollte die Fahrtrichtung des Fahrzeugs bei der Einstellung der Scheinwerfer und somit auch bei der Messung der Lichtverteilung berücksichtigt werden.

Die Fahrtrichtung wird durch die geometrische Fahrachse des Fahrzeuges definiert. Die geometrische Fahrachse selbst wird bei Autos beispielsweise durch die Spur der beiden Hinterräder festgelegt. Die geometrische Fahrachse ist dabei definiert als die Winkelhalbierende des Gesamtvorspurwinkels der Hinterachse.

In den meisten Fällen wird das SEP zur Vermessung der Lichtverteilung des Scheinwerfers relativ zur Fahrzeugkarosserie ausgerichtet. Dabei erfolgt die Ausrichtung beispielsweise entlang einer Längssymmetrieachse der Fahrzeugkarosserie. Die Ausrichtung der Längssymmetrieachse stimmt jedoch in manchen Fällen nicht mit der Fahrtrichtung, also der geometrischen Fahrachse, überein. Das bedeutet, dass die Einstellung des Scheinwerfers oder der Scheinwerfer nicht in Bezug auf die Fahrtrichtung vorgenommen wird, sondern bezüglich der Fahrzeugkarosserie.

Für eine zuverlässige Einstellung der Scheinwerfer sollte das SEP in Bezug auf die geometrische Achse des Fahrzeugs ausgerichtet sein, bevor das SEP die Lichtverteilung des Scheinwerfers erfasst.

Daher stellt sich das Problem, ein SEP bezüglich der geometrischen Fahrachse eines Fahrzeugs auszurichten.

Diese Aufgabe wird gelöst durch eine Vorrichtung, ein System und einem Verfahren nach den unabhängigen Ansprüchen. Weiterbildungen sind Gegenstand der nachfolgenden Beschreibung, der abhängigen Ansprüche und der Figuren.

Gemäß einem Aspekt der Erfindung wird eine Vorrichtung zum Ausrichten eines Scheinwerfer-Einstell-Prüfgeräts (SEP) bezüglich einer geometrischen Fahrachse eines Fahrzeugs vorgeschlagen. Unter Ausrichten des SEP wird hier und nachfolgend üblicherweise das Ausrichten der optischen Achse des SEP verstanden.

Die Vorrichtung zum Ausrichten eines SEP weist hierzu eine Lichtstrahlquelle, insbesondere einen Laser, zum Aussenden eines Lichtstrahls in Richtung des SEP auf. Weiter weist die Vorrichtung ein Befestigungselement zum Befestigen der zumindest einen Lichtstrahlquelle an einem Rad des Fahrzeugs auf.

Weiter umfasst die Vorrichtung eine Ausrichtungserfassungsvorrichtung zum Erfassen einer Messgröße, die von einem Winkel, den das SEP, insbesondere eine optische Achse des SEP, mit dem Lichtstrahl einschließt, abhängt.

Mit der vorgeschlagenen Vorrichtung kann das SEP insbesondere in Bezug auf die geometrische Fahrachse des Fahrzeuges ausgerichtet werden. Durch Erfassen der Messgröße lässt sich der Winkel zwischen der Spur des Rades, an dem die Lichtstrahlquelle befestigt ist, und der optischen Achse des SEPs bestimmen. Da die geometrische Fahrachse auf Grundlage der Laufrichtung bzw. der Spur der Räder definiert wird, lässt sich auf Grundlage der oben beschriebenen Messung auch die Ausrichtung der optischen Achse des SEP gegenüber der geometrischen Fahrachse und folglich gegenüber der Fahrtrichtung bestimmen. Bei Kraftfahrzeugen wird die geometrische Fahrachse typischerweise durch die Spur der beiden Hinterräder definiert.

Das Befestigungselement kann jedes Element sein, mit dem die Lichtquelle an einem Rad derart befestigbar ist, dass der von der Lichtquelle erzeugte Lichtstrahl einen bestimmten oder bestimmbaren Winkel mit der Spur des Rads aufweist. Oftmals ist das Befestigungselement derart ausgestaltet, dass der Lichtstrahl der Lichtstrahlquelle und die Spur des Rades nach dem Befestigen der Lichtstrahlquelle an dem Rad parallel zueinander ausgerichtet sind. Um die Lichtstrahlquelle am Rad zu befestigen, können beispielsweise aus dem Stand der Technik bekannte Radaufnehmer verwendet werden. Als Lichtstrahlquelle kann typischerweise ein Laser genutzt werden. Es können jedoch andere Lichtquellen benutzt werden, solange mit der Lichtquelle und einer geeigneten Optik ein kollimierter Lichtstrahl erzeugbar ist. Die Wellenlänge des abgestrahlten Lichts ist vorzugsweise im sichtbaren Bereich, ist jedoch nicht bloß auf den sichtbaren Bereich beschränkt.

Die Messgröße kann beispielsweise die Position des Lichtstrahls und/oder die Intensität des Lichtstrahls, beispielsweise an einer bestimmten Position, sein. Die Messgröße kann insbesondere erfasst werden, nachdem der Lichtstrahl zumindest ein optisches Element durchlaufen hat. Ein derartiges optisches Element kann beispielsweise eine Blende, eine Linse oder ein Spiegel sein. Die Ausrichtungserfassungsvorrichtung kann in manchen Ausführungsformen also zumindest ein optisches Element, wie beispielsweise eine Blende, eine Linse oder einen Spiegel, aufweisen. Die Ausrichtungserfassungsvorrichtung kann beispielsweise dazu eingerichtet sein, eine Messgröße des Lichtstrahls zu erfassen, nachdem dieser das optische Element durchlaufen hat oder an diesem reflektiert wurde. Das zumindest eine optische Element der Ausrichtungserfassungsvorrichtung kann beispielsweise am SEP angeordnet sein.

Die Messgröße kann beispielsweise die Intensität an einer bestimmten Position hinter einer Blende sein. Die Messgröße kann beispielsweise auch eine Position des Lichtstrahls auf einem Schirm, der hinter einer Blende angeordnet ist, sein. Die Ausrichtungserfassungsvorrichtung kann mindestens eine Blende, beispielsweise zwei hintereinander angeordnete Blenden aufweisen, die den Lichtstrahl nur dann passieren lassen, wenn der Lichtstrahl einen bestimmten Winkel mit dem SEP einschließt. In diesem Fall kann die Intensität des Lichtstrahls die Messgröße sein. Ebenfalls kann die Ausrichtungserfassungsvorrichtung ein oder mehrere Fadenkreuze aufweisen, wobei als Messgröße erfasst werden kann, ob der Lichtstrahl auf eines oder beide der Fadenkreuze auftrifft.

Die Ausrichtungserfassungsvorrichtung kann beispielsweise auch jede Vorrichtung sein, mit der ein Winkel zwischen dem Lichtstrahl und der optischen Achse des SEPs erfassbar oder messbar ist. Manchmal ist die Ausrichtungserfassungsvorrichtung dazu eingerichtet, den Winkel zwischen der Projektion der optischen Achse des SEP auf eine Bodenebene und der Projektion des Lichtstrahls auf die Bodeneben zu erfassen. Die Ausrichtungserfassungsvorrichtung kann dazu beispielsweise in Bezug auf das SEP eine festlegbare Relativposition oder Relativausrichtung aufweisen. Weiter kann die Ausrichtungserfassungsvorrichtung im allgemeinen Mittel aufweisen, die es ermöglichen, den Lichtstrahl zu erfassen.

Das SEP kann beispielsweise eine Lichterfassungseinheit zum Erfassen von Scheinwerferlicht eines Fahrzeugs aufweisen. Weiter kann das SEP ein Stativ aufweisen, an dem die Lichterfassungseinheit gehaltert, insbesondere höhenverstellbar und/oder um das Stativ drehbar gehaltert ist. Die Lichterfassungseinheit kann beispielsweise eine Kamera, insbesondere eine abbildende Optik zum Abbilden auf einen Schirm oder einen Sensor, beispielsweise einen CCD- oder CMOS-Sensor, aufweisen oder durch diese Einheit(en) gebildet sein. Die Lichterfassungseinheit kann beispielsweise ein Lichtsammelkasten sein oder diesen aufweisen. Die Lichterfassungseinheit kann dazu ausgebildet sein, vom Scheinwerfer erzeugtes Licht mittels der abbildenden Optik auf den Schirm oder den Sensor abzubilden. Dabei kann zumindest ein Teil der vom Scheinwerfer erzeugten Lichtverteilung durch die Lichterfassungseinheit erfasst werden. Die abbildende Optik kann beispielsweise eine Fresnel-Linse sein oder aufweisen. Die abbildende Optik weist in der Regel eine positive effektive Brechkraft auf. In den meisten Ausführungsformen ist die Lichterfassungseinheit derart ausgebildet, dass der Eintrittswinkel, unter dem ein Lichtstrahl oder Strahlenbündel auf die Lichterfassungseinheit trifft, vermessen werden kann. In manchen Ausführungsformen ist der Schirm oder der Sensor in der Brennebene der abbildenden Optik angeordnet. Dies kann beispielsweise bedeuten, dass der Schirm oder der Sensor senkrecht zur optischen Achse der abbildenden Optik ausgerichtet ist und der Abstand von Schirm oder Sensor zur Hauptebene der abbildenden Optik gleich der Brennweite der abbildenden Optik ist. Die abbildende Optik kann beispielsweise eine Fresnel-Linse sein und der Abstand zwischen Schirm oder Sensor und der Fresnel-Linse kann der Brennweite der Fresnel-Linse entsprechen. Die optische Achse des SEP kann insbesondere durch die Optische Achse der Lichterfassungseinheit gebildet sein, und insbesondere durch die optische Achse des ersten objektseitigen optischen Elements der Lichterfassungseinheit gebildet sein. Die optische Achse des SEP kann beispielsweise durch die optische Achse einer Fresnel-Linse der abbildenden Optik der Lichterfassungseinheit gebildet sein.

In manchen Ausführungsformen der Vorrichtung weist die Ausrichtungserfassungsvorrichtung eine Abbildungslinse und einen Schirm auf, wobei der Schirm in der Brennebene der Abbildungslinse angeordnet ist. Dadurch ist es möglich, den Winkel des einfallenden Lichtstrahls anhand der Auftreffposition des abgebildeten Lichtstrahls auf dem Schirm zu bestimmen. Der Schirm kann insbesondere auch durch einen Sensor gebildet werden, der Positionsinformationen der Auftreffposition des Lichtstrahls auf dem Schirm/Sensor elektronisch erfassen kann. In besonders vorteilhaften Ausführungsformen kann die Lichterfassungseinheit des SEP selbst die Ausrichtungserfassungsvorrichtung bilden. Es sind jedoch auch Ausführungsformen vom Schutzumfang erfasst, in denen die Ausrichtungserfassungsvorrichtung eine vom SEP unabhängige Vorrichtung ist, deren Position bezüglich des SEP bekannt oder vermessbar ist.

Es können auch Ausführungsformen der Vorrichtung vorgesehen sein, in denen die Ausrichtungserfassungsvorrichtung eine am SEP befestigbare oder in das SEP integrierbare ebene Spiegelfläche, wie einen Spiegel mit einem Reflexionsgrad im Sichtbaren von mindestens 80%, aufweist. Besonders vorteilhaft ist es, wenn die Vorrichtung außerdem eine Reflexionserfassungsvorrichtung zum Erfassen zumindest eines Teils des von der Spiegelfläche reflektierten Lichtstrahls aufweist.

Die Spiegelfläche kann beispielsweise durch einen Spiegel, der am SEP befestigt ist, gebildet werden. Die Spiegelfläche kann beispielsweise auch eine ebene Oberfläche des SEP sein, die der Lichtstrahlquelle zugewandt ist und den Lichtstrahl mit einem Reflexionsgrad von mindestens 80% reflektiert. Die Spiegelfläche kann insbesondere eine Fläche sein, die dazu eingerichtet ist, den Lichtstrahl zu reflektieren. Vorteilhafterweise ist die Ausrichtung der Spiegelfläche, insbesondere die Ausrichtung des Lots der Spiegelfläche gegenüber der optischen Achse des SEP bekannt, bestimmbar oder festlegbar.

Die Reflexionserfassungsvorrichtung kann beispielsweise dazu eingerichtet sein, eine Auftreffposition des reflektierten Lichtstrahls auf der Reflexionserfassungsvorrichtung zu erfassen. Auf Grundlage der Auftreffposition, sowie dem Winkel zwischen dem Lot der Spiegelfläche und der optischen Achse des SEP kann anschließend der Winkel zwischen Lichtstrahl und optischer Achse des SEP bestimmt werden. Die Reflexionserfassungsvorrichtung kann beispielsweise eine Skala aufweisen, die ein Ablesen des Abstands zwischen Auftreffposition und Abstrahlposition erleichtert.

In den Ausführungsformen der Vorrichtung zum Ausrichten eines SEP, in denen die Ausrichtungserfassungsvorrichtung eine Spiegelfläche und eine Reflexionserfassungsvorrichtung aufweist, ist es besonders vorteilhaft, wenn die Reflexionserfassungsvorrichtung am Befestigungselement angeordnet ist. Dadurch kann beispielsweise die Relativposition zwischen Reflexionserfassungsvorrichtung und Lichtstrahlquelle auf einfache Weise bestimmt und/oder festgelegt werden. Diese Ausführungsform ermöglicht es auch eine kompakte Vorrichtung bereitzustellen, die einfach zu bedienen ist.

Es sind Ausgestaltungen der Vorrichtung möglich, in denen die Vorrichtung weiter eine Anzeigevorrichtung aufweist, die dazu eingerichtet ist, die Ausrichtung einer optischen Achse des SEP gegenüber dem Lichtstrahl und/oder der geometrischen Fahrachse des Fahrzeuges oder daraus abgeleitete Größen und/oder Ausrichtungsanweisungen an einen Benutzer, insbesondere Pfeile, zur Ausrichtung des SEP anzuzeigen. Hierdurch kann eine aktuelle Ausrichtung des SEP angezeigt werden, welche beispielsweise bei Abweichung von einem Soll-Wert mittels Drehens des SEP durch den Benutzer geändert werden kann. Dadurch kann das Ausrichten des SEPs durch einen Benutzer einfach ausgeführt werden.

In manchen Ausführungsformen der Vorrichtung ist die Lichtstrahlquelle ein Punktlaser. In weiteren Ausführungsformen kann die Lichtstrahlquelle ein Linienlaser sein. In Ausführungsformen in denen die Lichtstrahlquelle ein Linienlaser ist, kann der Linienlaser bevorzugt derart ausgerichtet sein, dass eine vom Linienlaser erzeugte Laserlinie senkrecht zur Drehachse des Rades, an dem die Lichtquelle mit der Befestigungsvorrichtung befestigbar ist, ausgerichtet ist. Dies ermöglicht beispielsweise eine Vermessung des Sturzes des Rades, also dem Winkel zwischen der Radmittelebene und einer Senkrechten der Fahrbahn. Die Lichtstrahlquelle ist üblicherweise dazu ausgestaltet, zumindest einen Teil des sichtbaren Spektrums auszustrahlen, sodass ein Benutzer die Ausrichtung des SEP ohne zusätzliche optische Hilfsmittel durchführen kann.

Gemäß einem weiteren Aspekt der Erfindung wird ein System zum Vermessen von Scheinwerferlicht vorgeschlagen. Das System weist ein SEP und eine zuvor beschriebene Vorrichtung zum Ausrichten des Scheinwerfer-Einstell-Prüfgeräts auf.

In manchen Ausgestaltungen ist die Ausrichtungserfassungsvorrichtung Bestandteil des SEP. In diesen Ausführungsformen kann der Winkel zwischen optischer Achse des SEP und dem Lichtstrahl beispielsweise mit dem SEP selbst gemessen werden. Dabei kann die Lichterfassungseinheit die Ausrichtungserfassungsvorrichtung bilden. Die Lichterfassungseinheit kann beispielsweise eine Abbildungslinse und einen Schirm oder Sensor aufweisen, wobei der Schirm oder Sensor in der Brennebene der Abbildungslinse angeordnet ist. Auf diese Weise kann mit der Position des auf den Schirm oder den Sensor abgebildeten Lichtstrahls der Winkel zwischen Lichtstrahl und optischer Achse der Abbildungslinse, die ebenfalls die optische Achse des SEP definiert, bestimmt werden.

Unabhängig davon kann in manchen Ausführungsformen des Systems, in denen die Vorrichtung zum Ausrichten des SEP eine ebene Spiegelfläche und eine Reflexionserfassungsvorrichtung aufweist, die Spiegelfläche derart ausgerichtet sein, dass das Lot der Spiegelfläche parallel zur optischen Achse des SEP oder in einer vertikalen Ebene parallel zur optischen Achse des SEP verläuft. Dies kann die Ausrichtung des SEP und/oder Bestimmung des Winkels zwischen dem Lichtstrahl und der optischen Achse des SEP vereinfachen.

In weiteren Ausgestaltungen des Systems, in denen die Vorrichtung eine ebene Spiegelfläche und eine Reflexionserfassungsvorrichtung aufweist, ist die Spiegelfläche zumindest um eine vertikale Achse drehbar gegenüber dem SEP gelagert.

In diesen Ausgestaltungen des Systems kann die Spiegelfläche derart mit einem optischen Element des SEPs gekoppelt sein, dass eine Rotation der Spiegelfläche um eine vertikale Achse eine Verschiebung des optischen Elements gegenüber der optischen Achse des SEPs bewirkt. In manchen Fällen kann die Spiegelfläche mit dem Schirm oder dem Sensor der Lichterfassungseinheit gekoppelt sein, sodass eine Rotation der Spiegelfläche um eine vertikale Achse eine Verschiebung des Schirms oder des Sensors bewirkt. In manchen Fällen kann die Verschiebung um eine horizontale Achse erfolgen. In diesen Fällen kann beispielsweise eine Rotation der Spiegelfläche um einen Winkel Theta eine Verschiebung des optischen Elements um eine Strecke s bewirken, wobei die Strecke s mittels einfacher geometrischer Überlegungen, beispielsweise auf Grundlage des Winkels Theta und der Brennweite des abbildenden optischen Elements der Lichterfassungseinheit bestimmt werden kann. Unter Verschiebung des Schirms oder des Sensors kann auch lediglich die Verschiebung einer Skala oder eine nachfolgende Anpassung von Messwerten, insbesondere Positionsmessdaten, angesehen werden.

Unabhängig davon kann das System einen ersten Drehaktuator aufweisen, der dazu eingerichtet ist, das SEP zu drehen und/oder einen zweiten Drehaktuator aufweisen, der dazu eingerichtet ist, die ebene Spiegelfläche um eine vertikale Drehachse gegenüber dem SEP zu drehen. Dies kann beispielsweise zur automatischen Ausrichtung des SEP genutzt werden.

Alternativ oder ergänzend kann das SEP Verschiebemittel aufweisen, die dazu eingerichtet sind, das SEP gegenüber dem Fahrzeug zu verschieben. Dies kann beispielsweise ein Bewegen des SEP gegenüber dem Fahrzeug erleichtern. In manchen Ausführungsformen können die Verschiebemittel beispielsweise durch Schienen und/oder Rollen gebildet werden.

Gemäß einem weiteren Aspekt der vorliegenden Erfindung wird ein Verfahren zum Ausrichten eines vor dem Fahrzeug positionierten SEP auf die geometrische Fahrachse eines Fahrzeugs vorgeschlagen. Das Verfahren weist die folgenden Schritte auf:
- Befestigen einer Lichtstrahlquelle an ein erstes Rad eines Fahrzeuges derart, dass eine Projektion eines von der Lichtstrahlquelle ausgesendeten Lichtstrahls auf eine Bodenebene mit der Laufrichtung des ersten Rades einen bestimmten oder bestimmbaren Winkel einschließt,
- Erfassen einer ersten Messgröße, die von einem ersten Winkel zwischen einer optischen Achse des SEP und dem Lichtstrahl der an dem ersten Rad angeordneten Lichtstrahlquelle abhängt,
- Ausrichten des SEP auf Grundlage der erfassten ersten Messgröße.

In manchen Ausführungsformen des Verfahrens kann das Verfahren weiter die folgenden Schritte aufweisen:
- Befestigen einer Lichtstrahlquelle an ein zweites Rad eines Fahrzeuges, derart, dass eine Projektion eines von der Lichtstrahlquelle ausgesendeten Lichtstrahls auf eine Bodenebene mit der Laufrichtung des zweiten Rades einen bestimmten Winkel einschließt,
- Erfassen einer zweiten Messgröße, die von einem zweiten Winkel zwischen einer optischen Achse des SEP und dem Lichtstrahl der an dem zweiten Rad angeordneten Lichtstrahlquelle abhängt,
- Ausrichten des SEP auf Grundlage der erfassten zweiten Messgröße.

Die Befestigung der Lichtstrahlquelle an das jeweilige Rad erfolgt vorzugsweise derart, dass die Laufrichtung des jeweiligen Rades und der Lichtstrahl parallel zueinander ausgerichtet sind.

Die oben ausgeführten Verfahrensschritte können insbesondere mehrfach, beispielsweise iterativ durchgeführt werden.

Unabhängig davon kann das Verfahren in weiteren Ausführungsformen weiter die folgenden Schritte aufweisen
- Bestimmen eines ersten Winkels, a1, der ein Winkel zwischen der Laufrichtung des ersten Rades der spurgebenden Achse auf einer Bodenebene und der Projektion der optischen Achse des SEP auf die Bodenebene ist, aus der ersten erfassten Messgröße, und/oder
- Bestimmen eines zweiten Winkels, a2, der ein Winkel zwischen der Laufrichtung des zweiten Rades der spurgebenden Achse auf einer Bodenebene und der Projektion der optischen Achse des SEP auf die Bodenebene ist, aus der zweiten erfassten Messgröße,
- Ausrichten des SEP auf Grundlage des Winkels a1 und/oder des Winkels a2.

Dies kann insbesondere dann vorteilhaft sein, wenn die Projektion des Lichtstrahls auf die Bodenebene nicht parallel zur Laufrichtung des Rades verläuft, sondern einen bestimmten Winkel mit der Laufrichtung des Rades einschließt. Dies kann beispielsweise dann der Fall sein, wenn die Lichtstrahlquelle derart am Rad befestigt ist, dass der ausgesendete Lichtstrahl einen Winkel von ungleich 90° mit der Drehachse des Rades einschließt und/oder Laufrichtung und Lichtstrahl nicht parallel zueinander sind. Üblicherweise ist die Lichtstrahlquelle jedoch derart am Rad befestigt, dass der von ihr ausgesendete Lichtstrahl einen Winkel von 90° mit der Drehachse des Rades einschließt. Dieser eingeschlossene Winkel kann beispielsweise zum erfassten Winkel zwischen Lichtstrahl und optischer Achse des SEP addiert oder abgezogen werden, um den Winkel zwischen Laufrichtung des Rades und optischer Achse des SEP zu bestimmen.

Dabei kann in manchen Ausführungsformen der zuvor genannte Verfahrensschritt des Ausrichtens des SEP die folgenden Schritte aufweisen:
Rotieren des SEP um eine Achse senkrecht zur Bodenebene;
vorzugsweise erneutes Bestimmen des ersten Winkels und des zweiten Winkels; und
vorzugsweise Wiederholen des Rotierens und des erneuten Bestimmens bis der erste Winkel und der zweite Winkel betragsgleich sind.

Das kann bedeuten, dass das Ausrichten iterativ unter Bestimmung der Winkel und Rotieren erfolgt. Außer für den Fall, dass beide Räder parallel zueinander angeordnet sind, weisen der erste Winkel und der zweite Winkel nach der Ausrichtung unterschiedliche Vorzeichen auf. Für den Fall dass beide Räder parallel zueinander angeordnet sind, betragen der erste und der zweite Winkel nach der Ausrichtung 0°. Die Rotationsrichtung kann beispielsweise in Richtung des Lichtstrahls erfolgen, der den betragsmäßig größeren Winkel mit der optischen Achse einschließt. In manchen Ausführungsformen kann das SEP also in eine Richtung rotiert werden, die den Betrag des betragsmäßig größeren der beiden Winkel kleiner werden lässt bzw. den Betrag des betragsmäßig kleineren der beiden Winkel größer werden lässt. Durch Iteration kann das SEP derart ausgerichtet werden, dass beide Winkel gleich groß sind und entgegengesetzte Vorzeichen aufweisen.

In manchen Ausführungsformen kann das Ausrichten des SEP den Schritt aufweisen: Rotieren des SEP um einen Winkel c, wobei gilt c = 0,5 * (a1+a2). Dabei ist a1 der Wert des ersten Winkels, der zwischen der optischen Achse und der Laufrichtung des ersten Rades eingeschlossen wird und a2 der Wert des zweiten Winkels, der zwischen der optischen Achse und der Laufrichtung des zweiten Rades eingeschlossen wird. Wird beispielsweise der erste Winkel mit a1 = 5° gemessen und der zweite Winkel mit a2 = -3° gemessen, so wird das SEP anschließend um c = 0,5* (5°-3°) = 1° rotiert, sodass der erste Winkel und der zweite Winkel nach der Rotation betragsgleich sind und unterschiedliche Vorzeichen aufweisen, also +4° und -4° betragen. Im Allgemeinen können Winkel gegen Uhrzeigersinn als positiv und Winkel im Uhrzeigersinn als negativ angesehen werden. Eine Rotation um einen positiven Winkel kann als Rotation gegen den Uhrzeigersinn angesehen werden. Anstelle des Winkels kann auch eine andere Messgröße verwendet werden, vgl. Ausführungen oben. Die Ausrichtung des SEP erfolgt dann oftmals in ähnlicher Weise, also derart, dass beide Messgrößen betragsmäßig gleich sind und unterschiedliche Vorzeichen aufweisen.

Unabhängig davon kann das Ausrichten die Schritte aufweisen: Korrektur der von dem SEP gemessenen Messdaten auf Grundlage der erfassten Messgrö-ße(n) oder Winkel und/oder Verschieben eines SEP Projektionsschirms senkrecht zur optischen Achse des SEP, wobei ein Verschiebeweg, entlang dem der SEP Projektionsschirm verschoben wird, auf Grundlage der erfassten Messgröße(n) oder Winkel bestimmt wird.

Merkmale der zuvor beschriebenen Ausführungsformen und Aspekte können miteinander kombiniert werden. Insbesondere können die einzelnen Merkmale der Vorrichtung, des Systems und des Verfahrens miteinander kombiniert werden.

Die Erfindung soll nachfolgend anhand mehrerer Figuren beispielshaft erläutert werden.

Es zeigt schematisch
- Fig. 1: ein Fahrzeug in Draufsicht mit eingezeichneter geometrische Fahrachse.
- Fig. 2: ein Fahrzeug und ein SEP, das parallel zur geometrischen Fahrachse ausgerichtet ist, in Draufsicht.
- Fig. 3a: eine schematische Darstellung einer Ausführungsform der vorliegenden Erfindung in Draufsicht.
- Fig. 3b: eine schematische Darstellung einer Verschiebung des Projektionsschirms des SEP.
- Fig. 4: eine schematische Darstellung einer Ausführungsform der vorliegenden Erfindung und ein Fahrzeug in einer Seitenansicht.
- Fig. 5a: eine schematische Darstellung einer Ausführungsform der vorliegenden Erfindung in Draufsicht.
- Fig. 5b: eine schematische Darstellung einer weiteren Ausführungsform der vorliegenden Erfindung in Draufsicht.
- Fig. 6: eine Ausführungsform eines Befestigungselements mit einer Lichtquelle und einer Reflexionserfassungseinheit in einer Schrägansicht.
- Fig. 7: ein Blockdiagramm mit Verfahrensschritten.

Nachfolgend sind ähnliche Merkmale mit den gleichen Bezugszeichen gekennzeichnet.

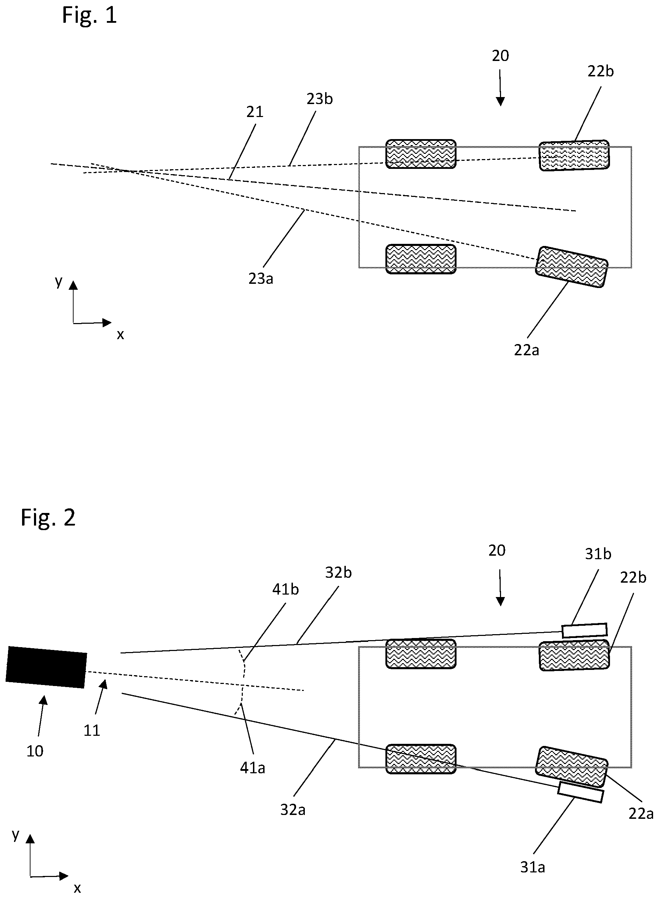

Fig. 1 zeigt eine schematische Darstellung eines Fahrzeugs 20 mit Rädern 22a, 22b in Draufsicht. Die Fahrtrichtung des Fahrzeugs 20 wird typischerweise durch die geometrische Fahrachse 21 definiert. Die geometrische Fahrachse 21 wird durch die Spur 23a des ersten Hinterrads 22a und die Spur 23b des zweiten Hinterrads 22b bestimmt. Die geometrische Fahrachse 21 ist dabei üblicherweise definiert als die Winkelhalbierende des Gesamtvorspurwinkels der Hinterachse. Der Gesamtvorspurwinkel ist in der Regel der Winkel den die Spuren 23a, 23b der Hinterräder 22a, 22b einschließen.

Figur 2 zeigt ein Fahrzeug 20 und ein Scheinwerfer-Einstell-Prüfgerät (SEP) 10 in Draufsicht und visualisiert einen Teilaspekt der vorliegenden Erfindung. Ziel der Erfindung ist es, ein SEP 10 in Bezug auf die geometrische Fahrachse 21 eines Fahrzeugs 20 auszurichten. In der Darstellung der Figur 2 ist an jedem der beiden Hinterräder 22a, 22b jeweils eine Lichtstrahlquelle 31a, 31b befestigt. Die Befestigung kann jeweils mit einem Befestigungselement 30 erfolgen. Es ist auch möglich, dass lediglich eine Lichtstrahlquelle 31 an einem Hinterrad 22a befestigt ist und zum Durchführen des Verfahrens die Lichtstrahlquelle 31 nacheinander und/oder wiederholt an dem ersten Hinterrad 22a und an dem zweiten Hinterrad 22b befestigt wird. Die Lichtstrahlquelle 31 kann im Allgemeinen jede Lichtquelle 31 sein, die einen im Wesentlichen kollimierten Lichtstrahl 32 aussendet, das bedeutet, dass der Abstand zwischen Fokuspunkt und Abstrahlposition des Lichtstrahls 33 größer als 2 m, oder größer als 5 m oder größer als 10 m ist. Die Lichtstrahlquelle 32 kann beispielsweise ein Punktlaser oder ein Linienlaser sein. In Ausführungsformen, in denen die Lichtstrahlquelle 32 ein Linienlaser ist, kann die Laserlinie beispielsweise senkrecht zur Drehachse des Rades 22 ausgerichtet sein.

Die Lichtstrahlquellen 31a, 31b im Beispiel der Figur 2 sind dabei derart angeordnet, dass sie mit der Drehachse des jeweiligen Rades einen Winkel von 90° einschließen. Die Lichtstrahlquellen 31, 31b sind in Richtung des SEP 10 ausgerichtet und senden im Wesentlichen horizontale Lichtstrahlen aus. Bei dieser Anordnung verlaufen die Orthogonalprojektionen der Lichtstrahlen 32a, 32b auf eine Bodenebene 50 parallel zu den Spuren 23a, 23b der jeweiligen Räder 22a, 22b. In den nachfolgenden Beispielen wird die Bodenebene 50 durch die Koordinaten x und y aufgespannt. Die senkrechte Richtung verläuft entlang der z-Koordinate. Mit der Vorrichtung und/oder dem Verfahren gemäß der vorliegenden Offenbarung kann das SEP 10 auch dann in Bezug auf die geometrische Fahrachse 21 ausgerichtet werden, wenn die Lichtstrahlquelle 31 einen Winkel, der kleiner oder größer als 90° ist, mit der Drehachse des jeweiligen Rades 22a, 22b einschließt.

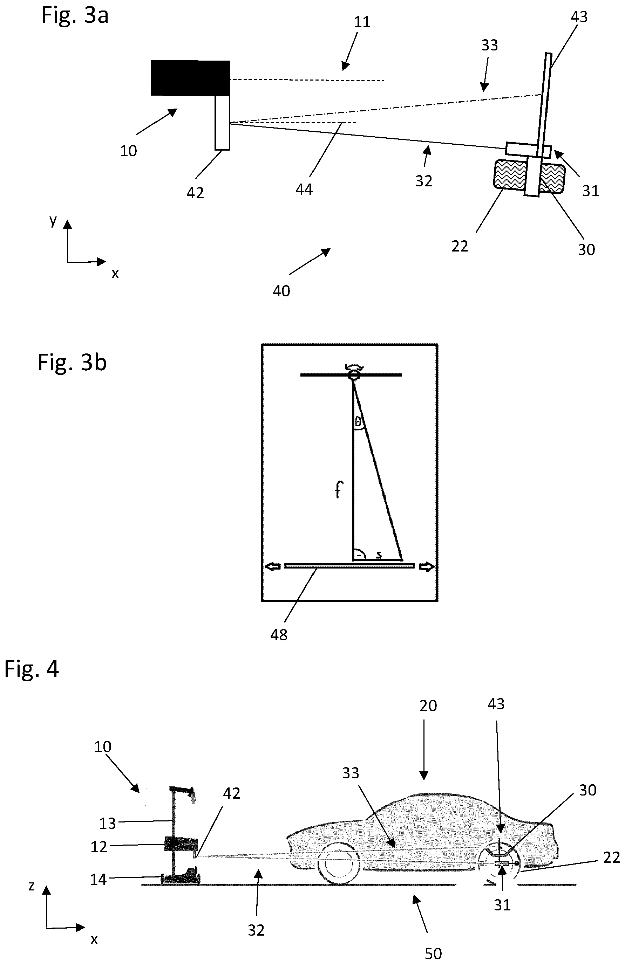

Zur Ausrichtung des SEP 10 auf die geometrische Fahrachse 21 weist die Vorrichtung eine Ausrichtungserfassungsvorrichtung 40 auf. Verschiedene Ausführungsformen der Ausrichtungserfassungsvorrichtung 40 sind in den Figuren 3 bis 6 dargestellt ist. Mit der Ausrichtungserfassungsvorrichtung 40 ist es möglich, eine Messgröße zu erfassen, die von einem Winkel zwischen dem Lichtstrahl und der optischen Achse des SEP 10 abhängt. In manchen Ausführungsformen ist es mit der Ausrichtungserfassungsvorrichtung 40 möglich, einen Winkel zwischen dem Lichtstrahl 32a, 32b und der optischen Achse 11 des SEP 10 zu vermessen. Es ist mit der Ausrichtungserfassungsvorrichtung 40 insbesondere möglich eine Messgröße, die von einem Winkel 41 zwischen der Orthogonalprojektion des Lichtstrahls 32 auf die Bodenebene 50 und der Orthogonalprojektion der optischen Achse 11 des SEP 10 auf die Bodenebene 50 abhängt, zu erfassen oder einen solchen Winkel 41 zu vermessen und zu bestimmen. Wenn die Lichtstrahlen horizontal verlaufen, also parallel zur Bodenebene 50, kann beispielsweise der Winkel 41 zwischen Lichtstrahl und SEP 10 vermessen werden. Wenn nachfolgend der Begriff Messgröße verwendet wird, so ist damit eine Messgröße gemeint, die von dem Winkel zwischen Lichtstrahl und SEP 10, insbesondere dem Winkel zwischen der Orthogonalprojektion des Lichtstrahls auf die Bodenebene und der Orthogonalprojektion der optischen Achse des SEP 10 auf die Bodenebene, abhängt.

Gemäß einem Aspekt der vorliegenden Erfindung wird das SEP nun derart um eine senkrechte Achse rotiert, bis die Winkel 41a, 41b, die mit den Vorrichtungen an beiden Hinterrädern des Fahrzeugs 20 erfasst werden, betragsmäßig gleich sind. In diesem Fall ist sichergestellt, dass die optische Achse 11 des SEP 10 parallel zur geometrischen Fahrachse 21 ausgerichtet ist. Gemäß einem weiteren Aspekt der Erfindung können die derart vermessenen Messgrö-ßen oder Winkel 41 auch genutzt werden, um Messungen des SEP 10 zu korrigieren.

Figur 3a zeigt schematisch eine Ausführungsform einer Ausrichtungserfassungsvorrichtung 40, mit der eine Messgröße oder ein Winkel 41 zwischen der optischen Achse 11 des SEP 10 und dem Lichtstrahl 32 erfasst, insbesondere vermessen, werden kann.

Die Ausrichtungserfassungsvorrichtung 40 weist dabei eine am SEP 10 befestigbare ebene Spiegelfläche 42, wie einen Spiegel mit einem Reflexionsgrad von mindestens 80%, auf. Es sind auch Ausführungsformen möglich, in denen die Spiegelfläche 42 in das SEP 10 integriert ist. Die Spiegelfläche 42 ist derart angeordnet, dass zumindest ein Teil 33 des Lichtstrahls 32, der von der Lichtstrahlquelle 31 ausgesendet wird, von der Spiegelfläche 42 reflektiert wird, beispielsweise mindestens 80%.

In der in Figur 3a dargestellten Ausführungsform ist die Spiegelfläche 42 derart angeordnet, dass das Lot 44 der Spiegelfläche 42 parallel zur optischen Achse 11 des SEP 10 verläuft. Es sind auch Ausführungsformen möglich, in denen das Lot 44 der Spiegelfläche 42 in einer vertikalen Ebene verläuft, die parallel zur optischen Achse 11 des SEP 10 verläuft. Vorteilhafterweise sind auch andere Ausrichtungen des Lots 44 der Spiegelfläche 42 möglich, solange ein bestimmbarer Winkel zwischen Lot 44 der Spiegelfläche 42 und der optischen Achse 11 des SEP 10 gegeben ist. Die Spiegelfläche 42 kann insbesondere auch drehbar, insbesondere um eine senkrechte Achse drehbar angeordnet sein. Dabei kann beispielsweise der Drehwinkel der Spiegelfläche 42 gegenüber der optischen Achse 11 des SEP 10 bestimmbar sein. In manchen Ausführungsformen der Erfindung kann auch der Winkel zwischen der Projektion des Lots 44 der Spiegelfläche 42 auf eine Bodenebene 50 und der Projektion der optischen Achse 11 des SEP 10 auf jene Bodenebene 50 bestimmbar oder einstellbar sein. Die Bodenebene 50 ist typischerweise die Fahrbahn 50 des Fahrzeugs 20 bzw. ein Boden einer Werkstatt, in der sich das Fahrzeug befindet.

In manchen Ausführungsformen kann die Spiegelfläche 42 mit einem optischen Element des SEP 10 gekoppelt sein, sodass eine Rotation des Spiegelelements 42 um eine vertikale Drehachse eine Verschiebung des optischen Elements des SEP 10, insbesondere eine Verschiebung in horizontaler Richtung, bewirkt. In manchen Ausführungsformen kann die Spiegelfläche 42 mit dem Schirm 48 oder dem Sensor der Lichterfassungseinheit 12 des SEP 10 gekoppelt sein, sodass eine Rotation der Spiegelfläche 42 um eine vertikale Achse eine Verschiebung des Schirms oder des Sensors der Lichterfassungseinheit 12 bewirkt in horizontaler Richtung. Unter Verschiebung kann auch lediglich die Verschiebung einer Messskala des SEP 10 oder eine nachfolgende Anpassung von Messwerten, insbesondere Positionsmessdaten, angesehen werden. Figur 3b zeigt eine schematische Darstellung einer Verschiebung des Projektionsschirms 48 des SEP 10. Die Verschiebung kann in manchen Fällen um eine Strecke mit der Länge s erfolgen. Figur 3b zeigt eine schematische Darstellung einer Verschiebung des Projektionsschirms 48 des SEP 10. Dabei kann s auf Grundlage der Brennweite f der abbildenden Optik des SEP 10 und dem Drehwinkel des Spiegels 42 Theta berechnet werden. Dazu kann beispielsweise folgende Beziehung verwendet werden: s = f*tan(theta).

Die Ausrichtungserfassungsvorrichtung 40 weist in der Ausführungsform der Figur 3a weiter eine Reflexionserfassungsvorrichtung 43 auf. Die Reflexionserfassungsvorrichtung 43 erfasst den von der Spiegelfläche 42 reflektierten Lichtstrahl 33. Die Reflexionserfassungsvorrichtung 43 kann beispielsweise dazu eingerichtet sein, eine Auftreffposition des reflektierten Lichtstrahls 33 auf der Reflexionserfassungsvorrichtung 43 zu erfassen. Erfassen der Auftreffposition kann hier insbesondere auch das sichtbar machen der Auftreffposition mit einem Schirm umfassen. Die Auftreffposition des reflektierten Lichtstrahls 33 kann dabei als Messgröße, die von dem Winkel zwischen Lichtstrahl und SEP 10 abhängt, angesehen werden In der in Figur 3a dargestellten Ausführungsform ist die Reflexionserfassungsvorrichtung 43 gemeinsam mit der Lichtstrahlquelle 31 am Befestigungselement 30 angeordnet. Dadurch kann auf besonders einfache Weise der Abstand zwischen der Abstrahlposition des Lichtstrahls 32 und der Auftreffposition des reflektierten Lichtstrahls 33 erfasst werden. Auf Grundlage dieses Wertes, sowie dem Winkel zwischen dem Lot 44 der Spiegelfläche 42 und der optischen Achse 11 des SEP 10, und beispielsweise des Abstands zwischen Spiegelfläche 42 und Befestigungselement 30 kann anschließend der Winkel 41 zwischen Lichtstrahl 32 und optischer Achse 11 des SEP 10 bestimmt werden. Dabei muss nicht zwingend ein Wert des Winkels 41 ermittelt werden. Es ist beispielsweise auch möglich, dass die Auftreffposition des Lichtstrahls 32 auf der Skala auf beiden Seiten einen betragsgleichen Abstand zur Abstrahlposition aufweist. Die Reflexionserfassungsvorrichtung 43 kann beispielsweise eine Skala aufweisen, die ein Ablesen des Abstands zwischen Auftreffposition und Abstrahlposition erleichtert.

Eine weitere Möglichkeit des Erfassens der Messgröße und/oder der Winkelbestimmung kann durch Rotieren der Spiegelfläche 42 um eine senkrechte Drehachse derart, dass der reflektierte Lichtstrahl in senkrechter Richtung über oder unter der Abstrahlposition des Lichtstrahls auf die Reflexionserfassungsvorrichtung auftrifft, erfolgen. Der Winkel zwischen der Projektion des Lichtstrahls 32 auf eine horizontale Bodenebene 50 und der Projektion der optischen Achse 11 des SEP 10 auf die horizontale Bodenebene 50 ergibt sich in diesem Fall direkt aus dem Winkel zwischen dem Lot 44 der Spiegelfläche 42 und der optischen Achse 11 des SEP 10 (jeweils ebenfalls in Projektion auf die Bodenebene 50).

Figur 4 zeigt eine Seitenansicht einer Ausführungsform der vorliegenden Erfindung. Das SEP 10 weist in dieser Ausführungsform ein Stativ 13 auf, an dem die Lichterfassungseinheit 12 beweglich, insbesondere höhenverstellbar, angeordnet ist. Das gesamte SEP 10 ist mittels Verschiebemitteln 14 gegenüber dem Fahrzeug 20 verschiebbar. In der vorliegenden Ausführungsform sind die Verschiebemittel durch Rollen realisiert, die eine Verschiebung des SEP entlang einer Richtung ermöglichen. Es sind ebenfalls Ausführungsformen möglich, in denen die Verschiebemittel 14 durch Schienensysteme realisiert sein, in oder auf denen Rollen des SEP 10 geführt sind oder in denen das SEP gleiten kann. Weiter kann das SEP 10 einen Aktuator aufweisen, mit dem die Lichterfassungseinheit 12 um eine vertikale Achse drehbar ist. Die vertikale Achse verläuft in der Figur 4 entlang der z-Koordinate.

In der in Figur 4 dargestellten Ausführungsform ist die Spiegelfläche 42 der Ausrichtungserfassungsvorrichtung 40 an der Lichterfassungseinheit 12 angeordnet. Außerdem kann ein Drehaktuator vorgesehen sein, mit dem die Spiegelfläche 42 gegenüber der optischen Achse 11 des SEP 10 um eine vertikale Achse drehbar ist.

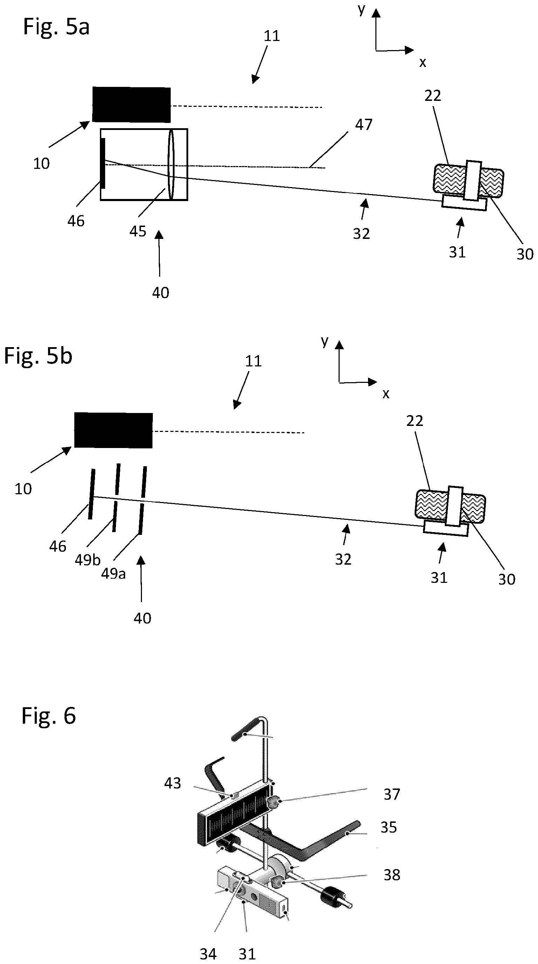

In Figur 5a ist eine weitere Ausführungsform der Ausrichtungserfassungsvorrichtung 40 dargestellt. Die Ausrichtungserfassungsvorrichtung 40 weist in dieser Ausführungsform eine Abbildungslinse 45 und einen Schirm 46. Die Abbildungslinse 45 bildet den Lichtstrahl 32 auf den Schirm 46 ab. Der Schirm 46 ist dabei vorteilhafterweise in der Brennebene der Abbildungslinse 45 angeordnet. In einer derartigen Anordnung von Schirm 46 und Abbildungslinse 45 lässt sich der Eingangswinkel des Lichtstrahls 32 in Bezug auf die optische Achse 47 der Abbildungslinse 45 anhand der Position des Auftreffpunkts des abgebildeten Lichtstrahls auf dem Schirm 46 bestimmen. Die Ausrichtungserfassungsvorrichtung 40 erfasst in dieser Ausführungsform also die Auftreffposition des Lichtstrahls 32 auf einem Schirm 46 als Messgröße. Diese Messgrö-ße ist abhängig vom Winkel, den der Lichtstrahl 32 mit dem SEP 10 einschließt. Der Vorteil dieser Ausführungsform besteht insbesondere darin, dass die Erfassung der Messgröße nahezu unabhängig von der Position der Ausrichtungserfassungsvorrichtung 40 erfasst werden kann, solange sichergestellt wird, dass der Lichtstrahl 32 auf die Abbildungslinse 45 trifft. In dem in Figur 4 gezeigten Beispiel, sind die optischen Achsen 11, 47 des SEP 10 und der Ausrichtungserfassungsvorrichtung 40 zueinander parallel ausgerichtet. Vom Schutzbereich sind allerdings auch Ausführungsformen umfasst, in denen die optischen Achsen 11, 47 des SEP 10 und der Ausrichtungserfassungsvorrichtung 40 einen bekannten Winkel größer 0° einschließen.

Zur Bestimmung des Winkels zwischen der optischen Achse 11 des SEP 10 und dem Lichtstrahl 32 kann zunächst der Winkel zwischen der optischen Achse 47 der Abbildungslinse 45 der Ausrichtungserfassungsvorrichtung 40 und dem Lichtstrahl 32 bestimmt werden. Wenn die optischen Achsen 11, 47 des SEP 10 und der Ausrichtungserfassungsvorrichtung 40 zueinander parallel ausgerichtet sind, ist der dadurch bestimmte Winkel auch gleich dem Winkel zwischen optischer Achse 11 des SEP 10 und dem Lichtstrahl 32. Wenn die optischen Achsen 11, 47 des SEP 10 und der Ausrichtungserfassungsvorrichtung 40 einen bekannten Winkel größer 0° einschließen, so kann dieser bekannte Winkel mit dem zuvor bestimmten Winkel verrechnet werden um den Winkel zwischen optischer Achse 11 des SEP 10 und dem Lichtstrahl 32 zu bestimmen.

In manchen Ausführungsformen weist das SEP 10 eine Lichterfassungseinheit auf, die ebenfalls eine Abbildungslinse und einen Projektionsschirm 48, der in der Brennebene der Abbildungslinse angeordnet ist, aufweist. In diesen Ausführungsformen kann die Ausrichtungserfassungsvorrichtung 40 durch die Lichterfassungseinheit des SEP 10 gebildet werden. Die Ausrichtungserfassungsvorrichtung 40 kann also in manchen Ausführungsformen Bestandteil des SEPs 10 sein. Dabei ist die optische Achse 11 des SEP 10 gleich der optischen Achse 47 der Ausrichtungserfassungsvorrichtung 40.

Figur 5b zeigt eine weitere Ausführungsform eine Ausrichtungserfassungsvorrichtung 40. In dieser Ausführungsform weist die Ausrichtungserfassungsvorrichtung 40 eine erste Blende 49a und eine zweite Blende 49b auf. Die Blenden 49a, 49b können dabei Lochblenden sein. Es sind auch Ausführungsformen möglich in denen die Blenden 49a,b Schlitzblenden sind, deren Schlitze vorzugsweise vertikal ausgerichtet sind. Es sind ebenfalls Ausführungsformen möglich in denen beide Blenden 49a,b unterschiedliche Formen aufweisen. Die Ausrichtungserfassungsvorrichtung 40 weist in dieser Ausführungsform weiter einen Schirm 46 auf. Die Blenden 49a,b sind nun derart angeordnet, dass der Lichtstrahl 32 nur dann auf den Schirm 46 trifft, wenn die Ausrichtungserfassungsvorrichtung 40 einen bestimmten Winkel mit dem Lichtstrahl 32 einschließt. Die Ausrichtungserfassungsvorrichtung 40 ist unter einem festen oder zumindest bestimmbaren Winkel zum SEP 10 angeordnet. Die Ausrichtungserfassungsvorrichtung 40 kann dann die Intensität des Lichtstrahls hinter den Blenden 49a, 49b als die Messgröße erfassen, die von dem Winkel, den das SEP 10 mit dem Lichtstrahl 32 einschließt, abhängt. Das SEP 10 kann derart ausgerichtet/gedreht werden, dass der Lichtstrahl 32 auf den Schirm 46 trifft, was dann der korrekten Ausrichtung des SEP 10 entspricht. In manchen Ausführungsformen können die Blenden 49a,b auch verschiebbar angeordnet sein. Die Blenden 49a,b können dann derart verschoben werden, dass der Lichtstrahl 32 durch beiden Blendenöffnungen hindurchtreten kann und auf den Schirm 46 trifft. Auf Grundlage der Position der Blenden 49a,b zueinander und der Position der Blenden 49a,b in Bezug auf das SEP 10 kann der Winkel ermittelt werden, den der Lichtstrahl 32 mit dem SEP 10 einschließt.

Weiter sind Ausführungsformen der Ausrichtungserfassungsvorrichtung 40 möglich, in denen die Ausrichtungserfassungsvorrichtung 40 lediglich eine Blende 49a und einen Schirm 48 aufweist. Auch in diesem Fall kann die Blende beispielsweise eine Lochblende oder eine Schlitzblende sein, deren Schlitz vorzugsweise vertikal ausgerichtet ist. Die Ausrichtungserfassungsvorrichtung 40 ist in dieser Ausführungsform unter einem festen oder zumindest bestimmbaren Winkel zum SEP 10 angeordnet. In einer derartigen Ausführungsform der Ausrichtungserfassungsvorrichtung 40 kann die Auftreffposition des Lichtstrahls 32 auf dem Schirm 46, nachdem dieser die Blendenöffnung durchlaufen hat, als Messgröße, die von dem Winkel, den das SEP 10 mit dem Lichtstrahl 32 einschließt, verwendet werden.

Figur 6 zeigt eine Ausführungsform eines Befestigungselements 30 zum Befestigen der Lichtstrahlquelle 31 an einem Rad 22 eines Fahrzeugs 20. Im gezeigten Ausführungsbeispiel kann die Lichtstrahlquelle 31 ein Punktlaser oder ein Linienlaser sein. Die Lichtstrahlquelle 31 kann vorzugsweise derart am Rad 22 befestigbar sein, dass der von der Lichtstrahlquelle 31 ausgesendete Lichtstrahl 32 mit der Drehachse des Rades 22 einen Winkel einschließt, der größer als 80° und kleiner als 100°, vorzugsweise größer als 85° und kleiner als 95° ist. In den meisten Fällen ist die Lichtstrahlquelle 31 derart mit dem Befestigungselement 30 am Rad 22 befestigbar, dass der ausgesendete Lichtstrahl 32 einen Winkel von 90° mit der Drehachse des Rades 22 einschließt. Laufrichtung des Rades 22 und Laserstrahl sind in diesem Fall parallel zueinander. Das Befestigungselement 30 kann beispielsweise eine zweiflügelige Aufhängevorrichtung 35 aufweisen. Die Aufhängevorrichtung 35 kann von oben auf die Lauffläche des Rades aufgelegt werden. Die Aufhängevorrichtung 35 kann derart ausgebildet sein, dass die Lichtquelle 31 sowie die Reflexionserfassungsvorrichtung 43 an der Aufhängevorrichtung 35 befestigbar sind. Weiter kann das Befestigungselement 30 beispielsweise eine Wasserwaage 34 aufweisen, die zur Ausrichtung der Lichtstrahlquelle 31, insbesondere zur horizontalen Ausrichtung der Lichtstrahlquelle 31, verwendbar ist.

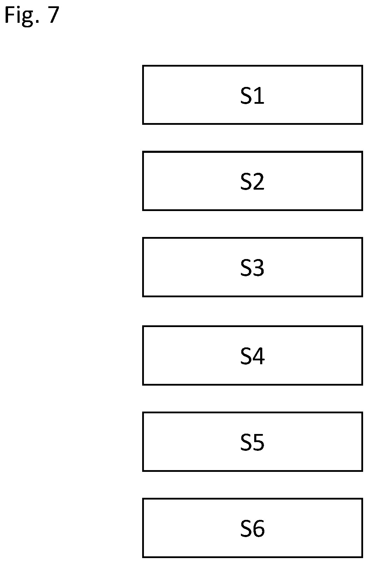

Figur 7 zeigt ein Diagramm mit verschiedenen Verfahrensschritten zur Ausrichtung eines SEP gemäß einer Ausführungsform der vorliegenden Erfindung.

Das Verfahren zum Ausrichten eines vor dem Fahrzeug positionierten SEP auf die geometrische Fahrachse weist die folgenden Schritte auf:
Befestigen S1 der Lichtstrahlquelle 31 an einem ersten Rad 22a eines Fahrzeuges 20. Die Befestigung erfolgt dabei derart, dass eine Projektion des von der Lichtstrahlquelle 31a ausgesendeten Lichtstrahls 32a auf eine Bodenebene 50 mit der Laufrichtung 23a des ersten Rades 22a einen bestimmten oder bestimmbaren Winkel einschließt. Die Befestigung erfolgt beispielsweise mit einem Befestigungselement 30 zum Befestigen der zumindest einen Lichtstrahlquelle 31 an einem Rad 22.

Vor oder nach dem Befestigen S1 wird das SEP 10 vor dem Fahrzeug 20 positioniert. Die Lichtstrahlquelle 31 wird angeschaltet und sendet einen Lichtstrahl in Richtung des SEP 10 aus.

In einem nächsten Schritt S2 wird ein erster Winkel 41b zwischen einer optischen Achse des SEP und dem Lichtstrahl 32, der von der Lichtstrahlquelle 31, die an dem ersten Rad 22a angeordnet ist, ausgesendet wird, erfasst. Diese Erfassung erfolgt in den meisten Fällen mit einer Ausrichtungserfassungsvorrichtung 40.

Nachfolgend kann das SEP 10 in einem weiteren Schritt S3 auf Grundlage der erfassten Messgröße oder des daraus ermittelten Winkels 41 ausgerichtet werden.

In manchen Ausführungsformen kann das Verfahren weiter die folgenden Schritte aufweisen:
Befestigen S4 einer Lichtstrahlquelle 31 an ein zweites Rad 22b des Fahrzeuges 20, derart, dass eine Projektion eines von der Lichtstrahlquelle 31b ausgesendeten Lichtstrahls 32b auf eine Bodenebene 50 mit der Laufrichtung 23b des zweiten Rades 22b einen bestimmten Winkel einschließt. Auch hier kann die Befestigung beispielsweise mit einem der zuvor beschriebenen Befestigungselemente 30 erfolgen. Ein weiterer Schritt umfasst das Erfassen S5 eines zweiten Winkels 41b, der ein Winkel zwischen einer optischen Achse 11 des SEP 10 und dem Lichtstrahl 32b der an dem zweiten Rad 22b angeordneten Lichtstrahlquelle 31b ist. Nachfolgend kann das SEP 10 im Schritt S6 auf Grundlage des zweiten erfassten Winkels 41b ausgerichtet werden.

Auf Grundlage des erfassten Winkels kann das SEP 10, bzw. ein Element des SEP 10, das die optische Achse 11 des SEP 10 definiert, insbesondere die Lichterfassungseinheit 12, derart ausgerichtet werden, dass diese Winkel betragsgleich sind. Das Verfahren kann beispielsweise iterativ durchgeführt werden. Es sind auch Ausführungsformen möglich, in denen die Ausrichtung gezielt so durchgeführt wird, dass keine Iterationsschritte nötig sind.

Es sei angemerkt, dass die Erfindung nicht auf Fahrzeuge mit vier Rädern oder zwei Hinterrädern beschränkt ist. Vielmehr kann die Erfindung auch für die Zweiräder, wie Motorräder, oder Dreiräder verwendet werden.

### Bezugszeichenliste:

- 10: Scheinwerfer-Einstell-Prüfgerät (SEP)
- 11: optische Achse des SEP
- 12: Lichterfassungseinheit
- 13: Stativ
- 14: Verschiebemittel
- 20: Fahrzeug
- 21: geometrische Fahrachse
- 22a,b: Rad
- 23a,b: Spurrichtung
- 30: Befestigungselement
- 31: Lichtstrahlquelle
- 32a,b: Lichtstrahl
- 33: reflektierter Lichtstrahl
- 34: Wasserwaage
- 35: Aufhängevorrichtung
- 40: Ausrichtungserfassungsvorrichtung
- 41: Winkel
- 42: Spiegelfläche
- 43: Reflexionserfassungsvorrichtung
- 44: Lot der Spiegelfläche
- 45: Abbildungslinse
- 46: Schirm
- 47: optische Achse der Abbildungslinse
- 48: Projektionsschirm des SEP
- 49a,b: Blende
- 50: Bodenebene/Fahrbahn

## Patentansprüche

1. Vorrichtung zum Ausrichten eines Scheinwerfer-Einstell-Prüfgeräts (10), SEP, bezüglich einer geometrischen Fahrachse (21) eines Fahrzeugs (20), aufweisend
• eine Lichtstrahlquelle (31), insbesondere ein Laser, zum Aussenden eines Lichtstrahls (32) in Richtung des SEP (10),
• ein Befestigungselement (30) zum Befestigen der zumindest einen Lichtstrahlquelle (31) an einem Rad (22) des Fahrzeugs (20),
• eine Ausrichtungserfassungsvorrichtung (40) zum Erfassen einer Messgröße, die von einem Winkel, den das SEP (10), insbesondere eine optische Achse des SEP (10), mit dem Lichtstrahl (32) einschließt, abhängt.

2. Vorrichtung nach dem vorangehenden Anspruch, wobei die Ausrichtungserfassungsvorrichtung (40) eine Abbildungslinse (45) und einen Schirm (46) aufweist, wobei der Schirm (46) in der Brennebene der Abbildungslinse (45) angeordnet ist.

3. Vorrichtung nach einem der vorangehenden Ansprüche, wobei die Ausrichtungserfassungsvorrichtung (40) eine am SEP (10) befestigbare oder in das SEP (10) integrierbare Spiegelfläche (42) und eine Reflexionserfassungsvorrichtung (43) zum Erfassen zumindest eines Teils des von der Spiegelfläche (42) reflektierten Lichtstrahls (33) aufweist, wobei die Reflexionserfassungsvorrichtung (43) vorzugsweise am Befestigungselement (30) angeordnet ist.

4. Vorrichtung nach einem der vorangehenden Ansprüche, wobei die Vorrichtung weiter eine Anzeigevorrichtung aufweist, die dazu eingerichtet ist, die Ausrichtung einer optischen Achse (11) des SEP (10) gegenüber dem Lichtstrahl (32) und/oder der geometrischen Fahrachse (21) des Fahrzeuges (20) oder daraus abgeleitete Größen und/oder Ausrichtungsanweisungen an einen Benutzer, insbesondere Pfeile, zur Ausrichtung des SEP (10) anzuzeigen.

5. Vorrichtung nach einem der vorangehenden Ansprüche, wobei die Lichtstrahlquelle (31) ein Punktlaser oder ein Linienlaser ist, wobei der Linienlaser bevorzugt derart ausgerichtet ist, dass eine vom Linienlaser erzeugte Laserlinie senkrecht zur Drehachse des Rades (22), an dem die Lichtquelle (31) mit der Befestigungsvorrichtung (30) befestigbar ist, ausgerichtet ist.

6. System zum Vermessen von Scheinwerferlicht, aufweisend ein Scheinwerfer-Einstell-Prüfgerät (10), SEP, und eine Vorrichtung zum Ausrichten des Scheinwerfer-Einstell-Prüfgeräts (10) nach einem der vorangehenden Ansprüche.

7. System nach dem vorangehenden Anspruch, wobei die Ausrichtungserfassungsvorrichtung (40) Bestandteil des SEP ist.

8. System nach einem der beiden vorangehenden Ansprüche mit einer Vorrichtung soweit rückbezogen auf Anspruch 3, wobei die Spiegelfläche (42) derart ausgerichtet ist, dass das Lot (44) der Spiegelfläche (42) parallel zur optischen Achse (11) des SEP (10) oder in einer vertikalen Ebene parallel zur optischen Achse (11) des SEP (10) verläuft.

9. System nach einem der vorangehenden Ansprüche 6-8 mit einer Vorrichtung soweit rückbezogen auf Anspruch 3, wobei die Spiegelfläche (42) zumindest um eine vertikale Achse drehbar gegenüber dem SEP (10) gelagert ist, wobei vorzugsweise die Spiegelfläche (42) derart mit einem optischen Element des SEPs (10) gekoppelt ist, dass eine Rotation der Spiegelfläche (42) um eine vertikale Achse eine Verschiebung des optischen Elements gegenüber der optischen Achse (11) des SEPs (10) bewirkt.

10. System nach einem der vorangehenden Ansprüche 6-9, weiter aufweisend einen ersten Drehaktuator, der dazu eingerichtet ist, das SEP (10) um eine vertikale Achse zu drehen und/oder einen zweiten Drehaktuator, der dazu eingerichtet ist, die ebene Spiegelfläche (42) um eine vertikale Drehachse gegenüber dem SEP (10) zu drehen und/oder, wobei das SEP (10) Verschiebemittel (14) aufweist, die dazu eingerichtet sind, das SEP (10) gegenüber dem Fahrzeug (20) zu verschieben.

11. Verfahren zum Ausrichten eines vor dem Fahrzeug (20) positionierten SEP (10) auf die geometrische Fahrachse (21) eines Fahrzeugs (20), aufweisend die Schritte:
• Befestigen (S1) einer Lichtstrahlquelle (31) an ein erstes Rad (22a) eines Fahrzeuges (20) derart, dass eine Projektion eines von der Lichtstrahlquelle (31) ausgesendeten Lichtstrahls (32) auf eine Bodenebene (50) mit der Laufrichtung des ersten Rades (22a) einen bestimmten Winkel einschließt,
• Erfassen (S2) einer ersten Messgröße, die von einem ersten Winkel (41a) zwischen einer optischen Achse (11) des SEP (10) und dem Lichtstrahl (32) der an dem ersten Rad (22a) angeordneten Lichtstrahlquelle (31) abhängt,
• Ausrichten (S3) des SEP auf Grundlage der erfassten ersten Messgröße.

12. Verfahren nach dem vorangehenden Anspruch, weiter aufweisend die Schritte,
• Befestigen (S4) einer Lichtstrahlquelle (31) an ein zweites Rad (22a) eines Fahrzeuges (20), derart, dass eine Projektion eines von der Lichtstrahlquelle (31) ausgesendeten Lichtstrahls (32) auf eine Bodenebene (50) mit der Laufrichtung des zweiten Rades (22b) einen bestimmten Winkel einschließt,
• Erfassen (S5) einer zweiten Messgröße, die von einem zweiten Winkel (41b) zwischen einer optischen Achse (11) des SEP (10) und dem Lichtstrahl (32) der an dem zweiten Rad (22b) angeordneten Lichtstrahlquelle (31) abhängt,
• Ausrichten des SEP (10) auf Grundlage der zweiten erfassten Messgröße.

13. Verfahren nach einem der beiden vorangehenden Ansprüche, aufweisend die Schritte:
• Bestimmen eines ersten Winkels, a1, der ein Winkel zwischen der Laufrichtung des ersten Rades (22a) der spurgebenden Achse auf einer Bodenebene (50) und der Projektion der optischen Achse (11) des SEP (10) auf die Bodenebene (50) ist, aus der ersten erfassten Messgröße, und/oder
• Bestimmen eines zweiten Winkels, a2, der ein Winkel zwischen der Laufrichtung des zweiten Rades (22b) der spurgebenden Achse auf einer Bodenebene (50) und der Projektion der optischen Achse (11) des SEP (10) auf die Bodenebene (50) ist, aus der zweiten erfassten Messgröße,
• Ausrichten des SEP (10) auf Grundlage des Winkels a1 und/oder des Winkels a2.

14. Verfahren nach dem vorangehenden Anspruch, wobei das Ausrichten des SEP die Schritte aufweist:
Rotieren des SEP (10) um eine Achse senkrecht zur Bodenebene (50);
vorzugsweise erneutes Bestimmen des ersten Winkels (41a) und des zweiten Winkels (41b); und vorzugsweise
Wiederholen des Rotierens und des erneuten Bestimmens bis der erste Winkel (41a) und der zweite Winkel (41b) betragsgleich sind,
und/oder
wobei das Ausrichten des SEP (10) den Schritt aufweist: Rotieren des SEP um einen Winkel c, wobei gilt c = 0.5 * (a1+a2).

15. Verfahren nach einem der Ansprüche 11 bis 14, wobei das Ausrichten die Schritte aufweist: Korrektur der von dem SEP (10) gemessenen Messdaten auf Grundlage der erfassten Messgröße(n) oder Winkel (41, 41a, 41b) und/oder Verschieben eines SEP (10) Projektionsschirms senkrecht zur optischen Achse (11) des SEP (10), wobei ein Verschiebeweg, entlang dem der SEP (10) Projektionsschirm verschoben wird, auf Grundlage der erfassten Messgröße(n) oder Winkel (41, 41a, 41b) bestimmt wird.
